(19) **Europäisches Patentamt**
**European Patent Office**
**Office européen des brevets**

(11) **EP 4 160 982 A1**

(12) **EUROPÄISCHE PATENTANMELDUNG**

(43) Veröffentlichungstag:
**05.04.2023 Patentblatt 2023/14**

(21) Anmeldenummer: **22020465.5**

(22) Anmeldetag: **29.09.2022**

(51) Internationale Patentklassifikation (IPC):
*H04L 9/32* (2006.01)   *H04L 9/00* (2006.01)

(52) Gemeinsame Patentklassifikation (CPC):
**H04L 9/3247; H04L 9/50**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **30.09.2021 DE 102021004921**

(71) Anmelder: **Giesecke+Devrient Mobile Security GmbH**
**81677 München (DE)**

(72) Erfinder: **Bauer, Sven**
**85591 Vaterstetten (DE)**

(74) Vertreter: **Giesecke + Devrient IP**
**Prinzregentenstraße 161**
**81677 München (DE)**

(54) **HASH-BASIERTES SIGNATURVERFAHREN**

(57)  Die Erfindung schafft ein Verfahren V zur Berechnung, zur Ausgabe durch eine ressourcenbeschränkte Recheneinrichtung, einer Hash-basierten Signatur, umfassend Schritte zur Hash-Berechnung, in denen geheime Daten verarbeitete werden, und Schritte zur Hash-Berechnung, in denen keine geheimen Daten verarbeitet werden, dadurch gekennzeichnet dass: - zumindest ein Teil der Schritte zur Hash-Berechnung, in denen keine geheimen Daten verarbeitet werden, durch ein mit der ressourcenbeschränkten Recheneinrichtung in Kommunikationsverbindung stehendes Terminal-Gerät durchgeführt werden, das höhere Ressourcen hat als die ressourcenbeschränkte Recheneinrichtung, und an die ressourcenbeschränkte Recheneinrichtung bereitgestellt werden; - Schritte zur Hash-Berechnung und Schritte zur Signatur-Berechnung, in denen geheime Daten verarbeitet werden, durch die ressourcenbeschränkte Recheneinrichtung durchgeführt werden.

Fig. 1

**Beschreibung**

Gebiet der Erfindung

Die Erfindung betrifft ein Verfahren zur Berechnung einer Hash-basierten Signatur.

Stand der Technik

Signaturberechnungen werden in ressourcenbeschränkten Prozessoreinrichtungen eingesetzt, wie beispielsweise Zahlungsverkehrskarten, Identitätsausweisen (mit Chip und Kommunikationsschnittstelle), sowie für die Authentisierung in Mobilfunknetzen vorgesehenen Teilnehmeridentitätsmodulen unterschiedlichen Formfaktors, wie SIM-Karten oder UICCs, festeingelöteten eUICCs, oder in das Chipset eines mobilen Endgeräts integrierten iUICCs.

Ein Signaturverfahren umfasst ein erstes Teilverfahren der Schlüsselgenerierung, in dem Schlüssel erzeugt oder generiert werden und ein sich daran anschließendes zweites Teilverfahren der Signaturerzeugung, in dem mit den generierten Schlüsseln eine Signatur erzeugt wird.

In praktischen Anwendungen gängige Signaturverfahren in ressourcenbeschränkten Prozessoreinrichtungen beruhen auf einem der Algorithmen RSA (Rivest-Shamir-Adleman), DSA (Digital Signature Algorithm) oder ECDSA (Elliptic Curve DSA).

Die aktuell in ressourcenbeschränkten Prozessoreinrichtungen eingesetzte Signaturverfahren wie RSA, DSA und ECDSA genügen den aktuellen Anforderungen an die Sicherheit einer ressourcenbeschränkten Prozessoreinrichtung gegen Spähangriffe auf bei der Schlüsselgenerierung oder Signaturberechnung verarbeitete geheime Daten wie geheime Schlüssel.

Der Signaturalgorithmus RSA beruht auf dem Faktorisierungsproblem. DSA, ECDSA beruhen auf diskreten Logarithmen in unterschiedlichen Gruppen. Es zeichnet sich ab, dass Quantencomputer künftig in der Lage sein werden, Signaturverfahren, die auf dem Faktorisierungsproblem oder diskreten Logarithmen basieren, und die heute als sicher gelten, relativ einfach zu brechen. Aus diesem Grund besteht für die Zukunft ein Bedarf, quantencomputerresistente Signaturverfahren zu haben.

Hash-basierte Signaturverfahren sind seit 1979 bekannt. Hash-basierte Signaturen können im Gegensatz zu den heute gängigen Signaturverfahren wie RSA, DSA und ECDSA nach derzeitigem Kenntnisstand nicht mit einem Quantencomputer gebrochen werden. Das macht sie zu wichtigen und aussichtsreichen Kandidaten für quantencomputerresistente kryptographische Signaturverfahren.

Bereits standardisierte Hash-basierte Signaturverfahren sind XMSS und XMSSMT [6, 3], LMS und HSS [7, 3]. Das Verfahren SPHINCS+ [1] ist zur Zeit eine "alternate candidate" im NIST Post-Quantum Cryptography Projekt, das heißt, SPHINCS+ ist als alternatives Verfahren vorgesehen, falls Hauptkandidaten für die Standardisierung wegen neu entdeckter Schwächen ausfallen.

Ein Nachteil Hash-basierter Signaturverfahren ist, dass die Schlüsselgenerierung und Signaturerstellung sehr rechenaufwändig sind und daher nur schwer oder nicht ohne Weiteres bei ressourcenbeschränkten Prozessoreinrichtungen eingesetzt werden können.

Ressourcenbeschränkte Prozessoreinrichtungen stehen in der Regel zeitweise oder dauerhaft in Kommunikationsverbindung mit einem rechenstärkeren Terminal-Gerät. Beispielsweise steht eine Zahlungsverkehrskarte (ressourcenbeschränkte Prozessoreinrichtung) beim Einsatz im Feld in kontaktbehafteter oder kontaktloser Kommunikationsverbindung mit einem Zahlungsverkehrsterminal (rechenstärkeres Terminal-Gerät). Ein Identitätsausweis (ressourcenbeschränkte Prozessoreinrichtung) steht in kontaktloser oder kontaktbehafteter Kommunikationsverbindung mit einem Ausweis-Prüfterminal (rechenstärkeres Terminal-Gerät). Ein Mobilfunk-Teilnehmeridentitätsmodul (ressourcenbeschränkte Prozessoreinrichtung) steht in - in der Regel kontaktbehafteter (aber denkbar auch kontaktloser) - Kommunikationsverbindung mit einem mobilen Endgerät (rechenstärkeres Terminal-Gerät) wie Smartphone, Tablet PC, Notebook, Automotive-Telematik-Box, oder dergleichen. Während der Produktion oder Personalisierung einer ressourcenbeschränkten Prozessoreinrichtung steht diese in Kommunikationsverbindung mit einer Produktionsmaschine (rechenstärkeres Terminal-Gerät).

Eine mögliche Lösung wäre, dass die ressourcenbeschränkte Prozessoreinrichtung rechenaufwändige Berechnungen teilweise oder ganz auf das externe rechenstärkere Terminal-Gerät wie ein Karten-Terminal oder eine Produktionsmaschine auslagert. Das Problem daran ist, dass dieses externe Gerät dabei Information über den geheimen Schlüssel der die ressourcenbeschränkten Prozessoreinrichtung erhalten kann, was später geleistete Signaturen anfechtbar machen kann.

Optimierungstechniken bei der Berechnung hash-basierter Signaturen ohne Auslagerung von Berechnungen an ein externes Gerät werden unter anderem in [8] beschrieben.

Zusammenfassung der Erfindung

Der Erfindung liegt die Aufgabe zu Grunde, ein Hash-basiertes Signaturverfahren in einer ressourcenbeschränkten Prozessoreinrichtung zu schaffen, das für die ressourcenbeschränkte Prozessoreinrichtung einen reduzierten Rechenaufwand hat, und beim bevorzugt Gesamtdauer zur Erstellung der Signatur (vorzugsweise umfassend Schlüsselgenerierung und Signaturberechnung) verringert ist.

Genauer liegt der Erfindung die Aufgabe zu Grunde, Verfahren aufzuzeigen, wie Teile der Schlüsselgenerierung von Hash-basierten Signaturverfahren auf ein externes Gerät ausgelagert werden können, ohne dass die Vertrauenswürdigkeit der mit einem erfindungsgemäß generierten Schlüssel geleisteten Signaturen gefährdet ist.

Die Aufgabe wird gelöst durch ein Verfahren nach Anspruch 1. Vorteilhafte Ausgestaltungen der Erfindung sind in den abhängigen Ansprüchen angegeben.

Das erfindungsgemäße Verfahren nach Anspruch 1 ist zur Berechnung einer Hash-basierten Signatur eingerichtet. Die berechnete Signatur ist zur Ausgabe durch eine ressourcenbeschränkte Recheneinrichtung vorgesehen. Das Verfahren umfasst Schritte zur Hash-Berechnung, in denen geheime Daten verarbeitet werden, und Schritte zur Hash-Berechnung, in denen keine geheimen Daten verarbeitet werden.

Das Verfahren ist dadurch gekennzeichnet dass

- zumindest ein Teil der Schritte innerhalb der Rechenschritte zur Hash-Berechnung, in denen keine geheimen Daten verarbeitet werden, durch ein mit der ressourcenbeschränkten Recheneinrichtung in Kommunikationsverbindung stehendes Terminal-Gerät durchgeführt werden, das höhere Ressourcen hat als die ressourcenbeschränkte Recheneinrichtung, und Rechenergebnisse dieser durch das Terminal-Gerät durchgeführten Schritte an die ressourcenbeschränkte Recheneinrichtung bereitgestellt werden, zur weiteren Verarbeitung durch die ressourcenbeschränkte Recheneinrichtung, um die Signatur zu berechnen; diese Rechenschritte werden also an ein rechenstärkeres Gerät ausgelagert; und

- Schritte zur Hash-Berechnung und Schritte zur Signatur-Berechnung, in denen geheime Daten verarbeitet werden, durch die ressourcenbeschränkte Recheneinrichtung selbst durchgeführt werden, also nicht ausgelagert werden.

Dadurch dass ein Teil der (Rechen-)Schritte in der Hash-Berechnung an ein mit der ressourcenbeschränkten Recheneinrichtung in Kommunikationsverbindung stehendes Terminal-Gerät ausgelagert wird, wird der Rechenaufwand für die ressourcenbeschränkte Recheneinrichtung reduziert. Die Schritte der Hash-Berechnung sind ein Teil der Schlüsselgenerierung zum Generieren der Schlüssel, mit denen nachfolgend die Signaturberechnung erfolgt. Das Terminal-Gerät kann die ausgelagerten Schritte, da es rechenstärker ist, in kürzerer Zeit berechnen als die ressourcenbeschränkte Recheneinrichtung dies selbst könnte. Dadurch ist der gesamte Zeitaufwand zur Berechnung der Schritte, die erfindungsgemäß ausgelagert werden, geringer als wenn die ressourcenbeschränkte Recheneinrichtung die Schritte selbst berechnen würde, selbst wenn Zeitaufwand für das Übertragen von Daten zwischen der ressourcenbeschränkten Recheneinrichtung und dem Terminal-Gerät aufgewendet werden muss.

Da andererseits Schritte zur Hash-Berechnung und Schritte zur Signatur-Berechnung, in denen geheime Daten verarbeitet werden, durch die ressourcenbeschränkte Recheneinrichtung selbst durchgeführt werden, also nicht ausgelagert werden, wird das Sicherheitsniveau des Verfahrens zur Signaturberechnung nicht beeinträchtigt.

Daher ist gemäß Anspruch 1 ein Hash-basiertes Signaturverfahren in einer ressourcenbeschränkten Prozessoreinrichtung, geschaffen, das für die ressourcenbeschränkte Prozessoreinrichtung einen reduzierten Rechenaufwand hat, und bei dem die gesamte Rechenzeit zur Erstellung der Signatur, umfassend Schlüsselgenerierung mit Hash-Berechnung, sowie Signatur-Berechnung, reduziert ist.

Der Grundgedanke der Erfindung beinhaltet also, einen Teil der Berechnungen auf ein rechenstarkes externes Gerät auszulagern, das außerhalb der ressourcenbeschränkten Prozessoreinrichtung liegt, aber nur Berechnungen, in welchen keine geheimen Daten verarbeitet werden. Dieses externe Gerät muss nicht vertrauenswürdig sein. Ein weiterer wesentlicher Vorteil der Erfindung ist, dass mit der erfindungsgemäßen Lösung trotz der Auslagerung an das externe Gerät dennoch die Sicherheit des Signaturverfahrens nicht kompromittiert wird.

Zum Signieren einer Nachricht wird üblicherweise die Signatur nicht über die Nachricht selbst berechnet, sondern über einen Hash-Wert dieser Nachricht. Diese Maßnahme kann auch in Verbindung mit der Erfindung angewandt werden. Verwendet man beispielsweise SHA256 als Hash-Funktion, sind immer 32 Bytes zu signieren, unabhängig von der tatsächlichen Länge der eigentlichen Nachricht.

Das erfindungsgemäße Verfahren kann wahlweise mit Optimierungstechniken wie den in [8] beschriebenen kombiniert werden.

Eine erste Ausführungsform des erfindungsgemäßen Verfahrens ist zur Berechnung, zur Ausgabe durch eine ressourcenbeschränkte Recheneinrichtung, einer Hash-basierten Signatur nach dem Schema WOTS+ eingerichtet. Das Verfahren umfasst die folgenden Schritte zur Hash-Berechnung:

a)

$$KEY = PRF(SEED, ADRS1) \quad (3)$$

b)

$$BM = PRF(SEED, ADRS2) \quad (4)$$

c)

$$out = F(KEY, in\ XOR\ BM) \quad (5).$$

Das Verfahren gemäß der ersten Ausführungsform der Erfindung ist dadurch gekennzeichnet dass: Schritte a) (3) und b) (4), in denen keine geheimen Daten verarbeitet werden, durch ein mit der ressourcenbeschränkten Recheneinrichtung in Kommunikationsverbindung stehendes Terminal-Gerät durchgeführt werden, das höhere Ressourcen hat als die ressourcenbeschränkte Recheneinrichtung, und das Rechenergebnis an die ressourcenbeschränkte Recheneinrichtung bereitgestellt wird, und Schritt c) (5), in dem das Rechenergebnis verarbeitet wird, ganz oder teilweise durch die ressourcenbeschränkte Recheneinrichtung durchgeführt wird, wobei zumindest diejenigen Teilschritte von c) (5), in denen geheime Daten verarbeitet werden, durch die ressourcenbeschränkte Recheneinrichtung selbst durchgeführt werden, also nicht ausgelagert werden.

Eine zweite Ausführungsform des erfindungsgemäßen Verfahrens ist zur Berechnung, zur Ausgabe durch eine ressourcenbeschränkte Recheneinrichtung, einer Hash-basierten Signatur nach dem Schema SPHINCS+ eingerichtet. Das Verfahren umfasst Schritt d) zur Hash-Berechnung:
d)

$$out = F(SEED, ADRS, in) \quad (7),$$

wobei gilt:
e)

$$out = SHA256(\ SEED\ ||\ |0....0\ ||ADRSc||m')\quad (8),$$

wobei gilt:
f)

$$m' = in\ XOR\ MGF1SHA256(SEED||ADRSc, l)\quad (9).$$

Das Verfahren gemäß der zweiten Ausführungsform der Erfindung ist dadurch gekennzeichnet dass: Schritt d), in dem keine geheimen Daten verarbeitet werden, durch ein mit der ressourcenbeschränkten Recheneinrichtung in Kommunikationsverbindung stehendes Terminal-Gerät durchgeführt wird, das höhere Ressourcen hat als die ressourcenbeschränkte Recheneinrichtung, und das Rechenergebnis an die ressourcenbeschränkte Recheneinrichtung bereitgestellt wird.

Als ressourcenbeschränkte Recheneinrichtung ist wahlweise eine der folgenden vorgesehen:

- eine Zahlungsverkehrskarte,
- ein Identitätsausweis mit Chip und Kommunikationsschnittstelle,
- ein für die Authentisierung in Mobilfunknetzen vorgesehenes Teilnehmeridentitätsmodul, wahlweise SIM-Karte oder UICC oder festeingelötetes eUICC oder in das Chipset eines mobilen Endgeräts integriertes iUICC.

Als Terminal-Gerät ist wahlweise eines der folgenden vorgesehen, entsprechend passend zur vorgesehenen ressourcenbeschränkten Recheneinrichtung:

- ein Zahlungsverkehrsterminal,
- ein Ausweis-Prüfterminal,
- ein mobiles Endgerät,
- ein Automotive-Telematikgerät,
- ein Produktionsmaschine oder Personalisierungsmaschine für ressourcenbeschränkte Rechenheinrichtungen.

Kurze Beschreibung der Zeichnungen

Im Folgenden wird die Erfindung an Hand von Ausführungsbeispielen und unter Bezugnahme auf die Zeichnung näher erläutert, in der zeigen:

Fig. 1    einen Merkle-Baum, zur Veranschaulichung eines Signaturverfahrens, das als Grundlage zur Anwendung eines erfindungsgemäßen Signaturberechnungs-Verfahrens geeignet ist;

Fig. 2    drei Konfigurationen von XMSS-artigen Signaturberechnungsverfahren, nämlich XMSS, XMSSMT mit 2 Ebenen und XMSSMT mit 4 Ebenen, und die hierbei jeweils erforderliche Anzahl von Hash-Berechnungen für Schlüsselgenerierung, Signaturerstellung und Signaturprüfung, zur Veranschaulichung des der Erfindung zu Grunde liegenden Problems;

Fig. 3    eine schematische Darstellung eines Winternitz-Signatur-Schemas, geeignet für die Anwendung eines erfindungsgemäßen Signaturberechnungs-Verfahrens.

Detaillierte Beschreibung von Ausführungsbeispielen

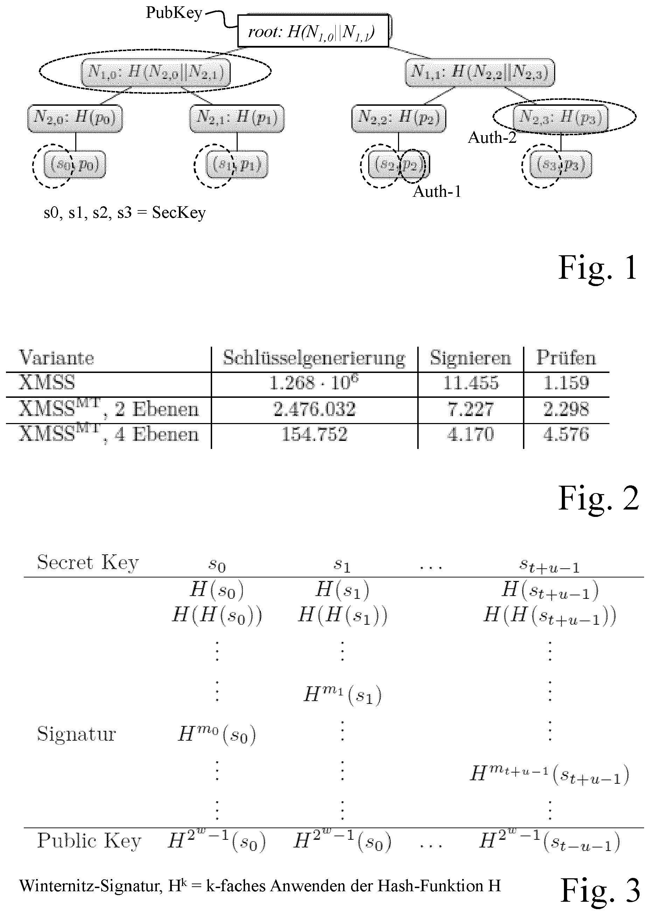

Fig. 1 zeigt einen Merkle-Baum, zur Veranschaulichung eines Hash-basierten Signaturverfahrens, das als Grundlage zur Anwendung eines erfindungsgemäßen Signaturberechnungs-Verfahrens geeignet ist.

Der Aufbau aller Hash-basierten Signaturverfahren ist ähnlich und entspricht dem in Figur 1 dargestellten Merkle-Baum. Als Public key (öffentlicher Schlüssel) PubKey ist der Wurzelknoten root, in Fig. 1 genauer root: $H(N_{1,0}|N_{1,1})$, des Merkle-Baums vorgesehen. Durch die (in Fig. 1 vier) Blätter des Merkle-Baums $(s_0, p_0)$, $(s_1, p_1)$, $(s_2, p_2)$, $(s_3, p_3)$ sind Signaturen dargestellt, die mittels Signaturschlüsseln $(s_0)$, $(s_1)$, $(s_2)$, $(s_3)$ gebildet worden sind. Die Signaturschlüssel können "one-time signature keys" sein, also einmalig verwendbare Signaturschlüssel, oder "few-times signature keys", also wenige Male mehrmals verwendbare Signaturschlüssel, mit denen jeweils eine oder wenige Nachrichten signiert werden können. Zum Prüfen (Verifizieren) der Signatur wird der Public Key Fig. 1: root) benötigt, den die Prüfer-Instanz (Verifizierer-Instanz) typischerweise in Form eines Zertifikats bekommt. Mit der eigentlichen Signatur wird noch der dem verwendeten Signaturschlüssel entsprechende Public Key mitgeliefert, sowie die Baumknoten, die die Prüfer-Instanz braucht, um die Hash-Kette bis zur Wurzel root nachrechnen zu können. Die Hash-Kette von einem Blatt, beispielsweise $(s_2)$, bis zur Wurzel root wird als "Authentication Path" oder Authentisierungspfad Auth bezeichnet. Beispielsweise verläuft der Authentisierungspfad für den Signaturschlüssel $(s_2)$ von der mit dem Signaturschlüssel $(s_2)$ gebildeten Signatur über den mitgelieferten Public Key $(p_2)$, den Knoten N2,3:$H(p_3)$ und den Knoten N1,0:$H(N_{2,0}|N_{2,1})$.

Bei manchen Signaturen, beispielsweise Winternitz One-Time Signaturen, ergibt sich die Vereinfachung, dass der One-Time Public Key nicht mit der Signatur übertragen werden muss, da er sich aus der Signatur berechnen lässt.

XMSSMT, HSS und SPHINCS+ verwenden mehrere Ebenen von Bäumen. Das heißt, die Blätter des Baums auf der obersten Ebene werden benutzt, um die Wurzeln der Bäume auf der nächsten Ebene zu signieren usw. Die Blätter der Bäume auf der untersten Ebene werden dann zum Signieren von Nachrichten verwendet. Dieser Ansatz ermöglicht ein Ausbalancieren zwischen dem Rechenaufwand für Schlüsselgenerierung, Signieren und Verifizieren sowie der Signaturgröße.

XMSS, XMSSMT, LMS und HSS verwenden für das Signieren von Nachrichten Winternitz One-Time Signaturen, (s. [6, 7, 3]). SPHINCS+ verwendet Winternitz One-Time Signaturen für das Signieren von Wurzelknoten und ein Few-Times Verfahren namens FORS für das Signieren von Nachrichten (s. [1]).

In der praktischen Anwendung von Winternitz One-Time Signaturen wird sichergestellt, dass nur Nachrichten einer bestimmten Länge signiert werden. Das wird dadurch erreicht, dass man nicht eine Nachricht m selbst, sondern einen Hash-Wert H dieser Nachricht m signiert. Verwendet man beispielsweise SHA256 als Hash-Funktion, sind immer 32 Bytes zu signieren, unabhängig von der tatsächlichen Länge der eigentlichen Nachricht. Der Hash-Wert wird in t Blöcke $m_j$ , j = 0, ... , t - 1 von w Bit aufgeteilt. Üblich ist beispielsweise w = 4. Im Beispiel mit SHA256 würde der zu signierende Hash-Wert in 64 Blöcke von 4 Bit aufgeteilt. Der entscheidende "Winternitz Trick" ist, eine Prüfsumme c zu definieren durch

$$c = \sum_{j=0}^{t-1} \left(2^w - 1 - m_j\right)$$

und, ebenfalls in u Blöcke zu w Bit unterteilt, als weitere Blöcke $m_t, ... , m_{t+u-1}$ an den zu signierenden Hash-Wert anzuhängen. Im Beispiel mit SHA256 hat c maximal den Wert 64 · 15 = 960, passt also in u = 3 Blöcke zu w = 4 Bit. Insgesamt sind daher 64 + 3 = 67 Blöcke zu 4 Bit zu signieren.

Ein Winternitz Secret Key besteht aus t + u zufälligen Bit-Strings sj , j = 0, ... , t + u - 1. Wir bezeichnen die Hash-Funktion mit H.

Fig. 3 zeigt in schematischer Darstellung für ein Winternitz-Signaturschema zu einem Secret Key (geheimen Schlüssel) sj , j = 0, ... , t + u - 1, den Public Key (öffentlichen Schlüssel) und den Signaturvorgang. Die Notation $H^k$ bezeichnet das k-fache Anwenden der Hash-Funktion H.

Die Fälschungssicherheit wird beim Winternitz-Signaturschema wesentlich durch die Prüfsumme c gewährleistet.

Es ist zwar für einen potentiellen Fälscher einfach, im Schema in Fig. 3 ein einer Spalte eine Zeile weiter nach unten zu gehen, indem er die Hash-Funktion ein weiteres Mal anwendet. Damit hätte er an dieser Stelle mj + 1 statt mj signiert. Der Wert der Prüfsumme c verringert sich dann aber, so dass der Fälscher, um wieder eine gültige Signatur zu erstellen, rechts im Schema eine Zeile nach oben gehen müsste. Dazu müsste er die Hash-Funktion H umkehren, was für kryptographische Hash-Funktionen praktisch nicht möglich ist. Entscheidend ist also die Beobachtung, dass ein Fälscher im Schema nur "nach unten" aber in keiner Spalte "nach oben" gehen kann, durch die Prüfsumme aber sichergestellt ist, dass, wenn man in einer Spalte "nach unten" geht, in einer anderen "nach oben" gehen müsste, was praktisch nicht möglich ist, weil das das Invertieren einer kryptographischen Hash-Funktion erfordert.

Die Darstellung in Fig. 3 ist vereinfacht. In praktischen Verfahren wie XMSS, XMSSMT, LMS, HSS und SPHINCS+, die Winternitz One-Time Signaturen als Komponente verwenden, gehen in die Hash-Funktion nicht nur die Werte der darüber liegenden Tabellenzeile wie in Fig. 3 ein, sondern noch ein weiterer Bit-String oder die Position des zu berechnenden Hash-Wertes in der Tabelle oder die Position der Tabelle im Baum. Nebenbei sei bemerkt, dass sich aus einer Winternitz Signatur leicht der Public Key bestimmen lässt, indem man in Spalte j die Hash-Funktion H noch 2w -1-mj mal anwendet, also im Schema bis zur letzten Zeile weitergeht. Das bedeutet, dass, wenn Winternitz Signaturen als Blätter eines Merkle-Baums gemäß Fig. 1 verwendet werden, man den Public Key pj nicht mehr wie in Fig. 1 als Teil der Signatur übermitteln muss.

Besonders rechenaufwändig ist bei derartigen Signaturverfahren die Schlüsselgenerierung. Um den Public Key, also den Wurzelknoten des Merkle-Baums zu bestimmen, müssen die Public Keys in allen Blättern und anschließend die Hashes der Zwischenknoten berechnet werden. Die Hauptarbeit fällt dabei typischerweise für die Berechnung der Public Keys in den Blättern an. Beispielhaft ist in Fig. 2 für drei Konfigurationen von XMSS-artigen Signaturverfahren, nämlich XMSS, XMSSMT mit 2 Ebenen und XMSSMT mit 4 Ebenen, der Aufwand für Schlüsselgenerierung, Signaturerstellung und Signaturprüfung wiedergegeben. Alle Konfigurationen können $2^{20}$ Signaturen leisten. Für XMSS erfordert die Schlüsselgenerierung fast 1,3 Milliarden Hash-Berechnungen, die Signaturberechnung gut 11 Tausend Hash-Berechnungen und die Signaturprüfung (Signatur-Verifizierung) gut eintausend Hash-Berechnungen. Die Schlüsselgenerierung erfordert also den weitaus größten Rechenaufwand. Von den fast 1,3 Milliarden Hash-Berechnungen für die Schlüsselgenerierung mit XMSS (erste Zeile in Fig. 2) entfallen wiederum nur ungefähr 2 Millionen auf das Berechnen der Baumknoten, der Rest entfällt auf das Berechnen der Blätter. Bei den beiden anderen Konfigurationen, XMSSMT mit 2 und 4 Ebenen, verteilt sich der Rechenaufwand ähnlich, wenn auch die Schlüsselgenerierung gegenüber dem Signieren (Signaturberechnung) und Verifizieren (Signatur-Verifizierung) relativ gesehen nicht so viel rechenaufwändiger ist wie bei XMSS.

Dass das Berechnen der Blätter den Hauptaufwand bei der Schlüsselgenerierung darstellt, lässt sich auch nachvollziehen, indem man sich vergegenwärtigt, wie viele Hash-Berechnungen für das Berechnen eines Schemas wie in Fig. 3 erforderlich sind.

Für rechenschwache Geräte wie Chipkarten ist die Schlüsselgenerierung daher sehr zeitaufwändig. Eine mögliche Lösung wäre, die Berechnungen teilweise auf ein externes Gerät wie ein Karten-Terminal oder eine Produktionsmaschine auszulagern. Das Problem daran ist, dass dieses externe Gerät dabei Information über den geheimen Schlüssel erhält, was dann später geleistete Unterschriften anfechtbar machen kann.

Wir werden weiter unten Details über den Aufbau der Hash-Funktionen SHA256 und SHA512 nutzen. Diese Details werden daher hier kurz wiedergegeben. Die Spezifikation von SHA256 und SHA512 findet sich in [4]. Die Input-Daten werden nach Padding in Blöcke b0, ... , bn-1 von 64 Bytes bei SHA256 und 128 Bytes bei SHA512 unterteilt. Ferner wird ein Initialwert c0 definiert und dann iterativ

$$c_{j+1} = f(c_j, b_j)$$

berechnet. Der Wert $c_n$ ist dann der Ausgabewert. Die Funktion f ist die sogenannten Rundenfunktion von SHA256 bzw. SHA512.

Auslagerung von Berechnungen bei Schlüsselgenerierung und Signaturerstellung mit XMSS und XMSSMT

Wir betrachten genauer, wie das Schema in Fig. 3 für WOTS+, eine spezielle Variante von Winternitz One-Time Signaturen, in XMSS und XMSSMT umgesetzt ist. Wir geben kurz die Beschreibung in [6, Abschnitt 3.1.2] wieder. Was in der vereinfachenden Fig. 3 als Anwendung der Funktion H dargestellt ist, zerfällt in [6, Abschnitt 3.1.2] in drei Schritte:

$$KEY = PRF(SEED, ADRS1) \qquad (3)$$

$$BM = PRF(SEED, ADRS2) \qquad (4)$$

$$out = F(KEY, in\ XOR\ BM) \qquad (5)$$

Die Daten SEED, ADRS1 und ADRS2 sind nicht geheim. Bei der Schlüsselgenerierung und der Signaturerstellung geht der geheime Schlüssel nur in den Wert in und damit auch in den Wert out ein. Die Schritte in den Gleichungen (3) und (4) lassen sich daher an ein externes Gerät auslagern, ohne dass geheime Information preisgegeben werden muss. Weiter unten wird die Frage betrachtet, ob falsche Berechnungen durch das externe Gerät zu einem erfolgreichen Angriff genutzt werden können.
Die genaue Definition der Funktionen PRF und F hängt von der zu Grunde liegenden Hash-Funktion ab. Die Definitionen finden sich in [6, Abschnitt 5.1]. Wird SHA256 verwendet, sieht Gleichung (5) folgendermaßen aus:

$$out = SHA256\ (0\ ...\ 03\ \{32\ Bytes]\ ||KEY||in\ XOR\ BM) \qquad (6)$$

Der Parameter KEY hat eine Länge von 32 Bytes. Zusammen mit dem Präfix 0...03, der ebenfalls eine Länge von 32 Bytes hat, ergibt sich genau die Länge eines Input Blocks von 64 Bytes der Hash-Funktion SHA256. Nach der in [6] in Abschnitt 1.4 beschriebenen Struktur von SHA256 und SHA512 gehen die geheimen Daten in XORBM erst in den zweiten Block ein. Das bedeutet, die erste von zwei Rundenfunktionsberechnungen in Gleichung (5) kann ebenfalls an ein externes Gerät ausgelagert werden, ohne dass geheime Daten übermittelt werden müssen. Insgesamt erfordern die Gleichungen (3), (4) und (5) sechs Rundenfunktionsberechnungen, aber nur in eine gehen geheime Daten ein. Damit könnten ca. 80% des Rechenaufwandes ausgelagert werden.
Werden SHAKE128 oder SHAKE256 zur Konstruktion von PRF und F benutzt, fällt die Optimierung geringer aus, da die Daten in diesem Fall in einem Block verarbeitet werden müssen. Es können aber immer noch die Gleichungen (3) und (4) zur Berechnung ausgelagert werden, was ca. zwei Dritteln des Rechenaufwandes entspricht.

Auslagerung von Berechnungen bei Schlüsselgenerierung und Signaturerstellung mit SPHINCS+

Die Spezifikation von SPHINCS+ [1] benutzt zwar ebenfalls die Bezeichnung WOTS+, verwendet aber eine etwas andere Konstruktion als XMSS und XMSSMT. Der in den Gleichungen (3), (4) und (5) beschriebene Kern der Berechnung der "Hash-Ketten" wie in Fig. 3, ist bei SPHINCS+ einfacher (siehe [1, Abschnitt 3.2]):

$$out = F(SEED, ADRS, in) \qquad (7)$$

Mit SHA256 als Hash-Funktion ist die Operation F dabei in [1, Abschnitt 7.2.2] folgendermaßen definiert:

$$out = SHA256(\ SEED\ \{32\ Bytes\}\ ||\ |0....0\ \{32\ Bytes\}\ ||ADRSc||m') \qquad (8)$$

Hierbei ist m0 in der "simple variant" unmittelbar der Input m0 = in. In der "robust variant" wird der Input ähnlich wie bei XMSS noch mit einer "bit mask" verXORt:

$$m0 = \text{in XOR MGF1SHA256}(\text{SEED}||\text{ADRSc, l}) \qquad (9)$$

Im Fall der "robust variant" kann die Berechnung von MGF1SHA256 ausgelagert werden, da keine geheimen Daten eingehen. Das VerXORen der "Bit Mask" kann nicht ausgelagert werden, da in geheime Daten enthält.

Sowohl im Fall der "robust variant" wie auch der "simple variant" kann das Verarbeiten des ersten Hash-Blocks in (7) außerhalb des eigentlichen Geräts stattfinden.

Sicherheit

Vorteilhafterweise werden bei den erfindungsgemäß ausgelagerten Berechnungen keine geheimen Daten nach außen gegeben. Es bleibt aber die Frage, ob ein externes Gerät durch die Rückgabe eines gezielt falschen Ergebnisses an geheime Daten gelangen oder die Verwendung bekannter Daten erzwingen kann.

Aufgrund der Beschaffenheit von kryptographischen Hash-Funktionen und gegebenenfalls ihrer Rundenfunktion wird das als praktisch unmöglich angesehen. Ein erfolgreicher entsprechender Angriff würde auf eine schwerwiegende Schwäche in der Hash-Funktion hinweisen.

Immer möglich ist natürlich ein Denial-of-Service Angriff durch das externe Gerät, indem es schlicht falsche Daten liefert. Das führt zu defekten Schlüsseln oder Signaturen. Da die Erfindung aber hauptsächlich auf rechenschwache Geräte wie Chipkarten abzielt, wird das nicht als problematisch angesehen. Derartige Geräte sind immer von externen Systemen wie einer Stromversorgung oder Datenübertragung abhängig oder können einfach physikalisch zerstört werden. Alle diese Szenarien stellen ebenfalls Formen von Denial-of-Service Angriffen dar. Solche Angriffe sind bei der hauptsächlich betrachteten Geräteklasse also nicht vollständig zu verhindern.

Anwendung bei der Signaturprüfung ist nicht möglich

Das Schema entsprechend Fig. 3 kommt auch bei der Signaturprüfung bei den Verfahren XMSS, XMSSMT und SPHINCS+ zur Anwendung. Ein entscheidender Unterschied ist, dass bei der Signaturprüfung keine geheimen Daten eingehen, da jedermann eine Signatur prüfen können soll. Trotzdem kann man die Signaturprüfung nicht einfach vollständig an ein nicht vertrauenswürdiges externes Gerät auslagern, weil das eine eigentlich ungültige Signatur für gültig erklären könnte. Auch bei einer nur teilweisen Auslagerung, könnte das externe Gerät statt der korrekten Daten Zwischenergebnisse aus der Prüfung einer anderen Signatur übermitteln und so bewirken, dass eine ungültige Signatur fälschlicherweise als gültig angesehen wird.

Die Signaturprüfung kann aber indirekt von der erfindungsgemäßen Umsetzung von Schlüsselgenerierung und Signaturerstellung profitieren. Wie man in Fig. 2 beispielhaft sieht, erlaubt die Wahl der Parameter des Signaturverfahrens Trade-Offs (eine Ausbalancierung) zwischen dem Rechenaufwand für Schlüsselgenerierung, Signaturerstellung und Prüfung. Werden also Schlüsselgenerierung und Signaturerstellung erfindungsgemäß beschleunigt, kann man eine Konfiguration wählen, die die Signaturprüfung auf Kosten der Schlüsselgenerierung und Signaturerstellung beschleunigt.

Weitere Optimierungen

Bei einem Signaturverfahren wie in Fig. 1 (Merkle-Baum) wird schon bei der Schlüsselgenerierung festgelegt, wie viele Signaturen insgesamt erstellt werden können. Ist zu diesem Zeitpunkt schon klar, dass diese Zahl nicht ausgeschöpft werden wird, ergeben sich weitere Optimierungsmöglichkeiten. Für One-Time Schlüssel an den Blättern eines Baums wie in Abbildung 1, die nie verwendet werden, kann das Schema in Fig. 3 fast vollständig an ein externes Gerät ausgelagert werden. Damit erfährt das externe Gerät zwar einen großen Teil eines geheimen One-Time Schlüssels, was aber nicht ausreicht, um Signaturen zu fälschen. Konkret genügt es, eine Spalte im Schema nach Fig. 1 höchstens erfindungsgemäß auszulagern und den Rest vollständig extern rechnen zu lassen. Der korrespondierende private One-Time Schlüssel darf dann aber keinesfalls zum Signieren einer Nachricht verwendet werden. Andernfalls entsteht eine ähnliche Situation wie bei der Wiederverwendung eines One-Time Schlüssels. Dieses Szenario wird in [2] betrachtet und gezeigt, dass das Wiederverwenden eines One-Time Schlüssels im Fall von Winternitz Signaturen das Fälschen von Signaturen ermöglicht.

Zitierter Stand der Technik

[1] Jean-Philippe Aumasson u. a. "SPHINCS+, Submission to the NIST postquantum project, v.3". In: (Okt. 2020). url: https://sphincs.org/data/sphincs+-round3-specifi-cation.pdf.

[2] Leon Groot Bruinderink und Andreas Hülsing. "Oops, I did it again" - Security of One-Time Signatures under Two-Message Attacks. Cryptology ePrint Archive, Report 2016/1042. 2016. url: https://eprint.iacr.org/2016/1042.

[3] David A. Cooper u. a. Recommendation for Stateful Hash-Based Signature Schemes. Okt. 2020. url: https://doi.org/10.6028/NIST.SP.800-208.

[4] FIPS 180-4. Aug. 2015. url: https://doi.org/10.6028/NIST.FIPS.180-4.

[5] Matthew Green. Hash-based Signatures: An illustrated Primer. Apr. 2018.url: https://blog.cryptographyengineering.com/2018/04/07/hashbased-signatures-anillustrated-primer/.

[6] Andreas Huelsing u. a. XMSS: eXtended Merkle Signature Scheme. RFC 8391. Mai 2018. doi: 10.17487/RFC8391. url: https://rfc- editor.org/rfc/rfc8391.txt.

[7] David McGrew, Michael Curcio und Scott Fluhrer. Leighton-Micali Hash-Based Signatures. RFC 8554. Apr. 2019. doi: 10.17487/RFC8554. url:https://rfc-editor.org/rfc/rfc8554.txt.

[8] Wen Wang u. a. XMSS and Embedded Systems - XMSS Hardware Accelerators for RISC-V. Cryptology ePrint Archive, Report 2018/1225. 2018. url:https://eprint.iacr.org/2018/1225.

**Patentansprüche**

1. Verfahren zur Berechnung, zur Ausgabe durch eine ressourcenbeschränkte Recheneinrichtung, einer Hash-basierten Signatur, umfassend Schritte zur Hash-Berechnung, in denen geheime Daten verarbeitet werden, und Schritte zur Hash-Berechnung, in denen keine geheimen Daten verarbeitet werden,
**dadurch gekennzeichnet dass**

   - zumindest ein Teil der Schritte zur Hash-Berechnung, in denen keine geheimen Daten verarbeitet werden, durch ein mit der ressourcenbeschränkten Recheneinrichtung in Kommunikationsverbindung stehendes Terminal-Gerät durchgeführt werden, das höhere Ressourcen hat als die ressourcenbeschränkte Recheneinrichtung, und Rechenergebnisse dieser Schritte an die ressourcenbeschränkte Recheneinrichtung bereitgestellt werden;
   - Schritte zur Hash-Berechnung und Schritte zur Signatur-Berechnung, in denen geheime Daten verarbeitet werden, durch die ressourcenbeschränkte Recheneinrichtung durchgeführt werden.

2. Verfahren nach Anspruch 1, zur Berechnung, zur Ausgabe durch eine ressourcenbeschränkte Recheneinrichtung, einer Hash-basierten Signatur nach dem Schema WOTS+, umfassend die folgenden Schritte zur Hash-Berechnung:

   a)

   $$KEY = PRF(SEED, ADRS1) \quad (3)$$

   b)

   $$BM = PRF(SEED, ADRS2) \quad (4)$$

   c)

   $$out = F(KEY, in\ XOR\ BM) \quad (5),$$

   **dadurch gekennzeichnet dass**:
   Schritte a) (3) und b) (4), in denen keine geheimen Daten verarbeitet werden, durch ein mit der ressourcenbeschränkten Recheneinrichtung in Kommunikationsverbindung stehendes Terminal-Gerät durchgeführt werden, das höhere Ressourcen hat als die ressourcenbeschränkte Recheneinrichtung, und das Rechenergebnis an die ressourcenbeschränkte Recheneinrichtung bereitgestellt wird, und Schritt c) (5), in dem das Rechenergebnis verarbeitet wird, ganz oder teilweise durch die ressourcenbeschränkte Recheneinrichtung durchgeführt wird, wobei zumindest diejenigen Teilschritte von c) (5), in denen geheime Daten verarbeitet werden, durch die ressourcenbeschränkte Recheneinrichtung durchgeführt werden.

3. Verfahren nach Anspruch 1, zur Berechnung, zur Ausgabe durch eine ressourcenbeschränkte Recheneinrichtung, einer Hash-basierten Signatur nach dem Schema SPHINCS+, umfassend Schritt d) zur Hash-Berechnung:
d)

$$out = F(SEED, ADRS, in) \qquad (7),$$

wobei gilt:
e)

$$out = SHA256( SEED \; || \; |0....0 \, ||ADRSc||m' ) \qquad (8),$$

wobei gilt:
f)

$$m' = in \; XOR \; MGF1SHA256(SEED||ADRSc, l) \qquad (9),$$

**dadurch gekennzeichnet dass**:
Schritt d), in dem keine geheimen Daten verarbeitet werden, durch ein mit der ressourcenbeschränkten Recheneinrichtung in Kommunikationsverbindung stehendes Terminal-Gerät durchgeführt wird, das höhere Ressourcen hat als die ressourcenbeschränkte Recheneinrichtung, und das Rechenergebnis an die ressourcenbeschränkte Recheneinrichtung bereitgestellt wird.

4. Verfahren nach einem der Ansprüche 1 bis 3, wobei als ressourcenbeschränkte Recheneinrichtung eine der folgenden vorgesehen ist:

- eine Zahlungsverkehrskarte,
- ein Identitätsausweis mit Chip und Kommunikationsschnittstelle,
- ein für die Authentisierung in Mobilfunknetzen vorgesehenes Teilnehmeridentitätsmodul, wahlweise SIM-Karte oder UICC oder festeingelötetes eUICC oder in das Chipset eines mobilen Endgeräts integriertes iUICC;

und wobei als Terminal-Gerät eines der folgenden vorgesehen ist:

- ein Zahlungsverkehrsterminal,
- ein Ausweis-Prüfterminal,
- ein mobiles Endgerät,
- ein Automotive-Telematikgerät,
- ein Produktionsmaschine oder Personalisierungsmaschine für ressourcenbeschränkte Recheneinrichtungen.

PubKey

root: $H(N_{1,0}||N_{1,1})$

$N_{1,0}$: $H(N_{2,0}||N_{2,1})$

$N_{1,1}$: $H(N_{2,2}||N_{2,3})$

$N_{2,0}$: $H(p_0)$

$N_{2,1}$: $H(p_1)$

$N_{2,2}$: $H(p_2)$

$N_{2,3}$: $H(p_3)$

Auth-2

$(s_0, p_0)$

$(s_1, p_1)$

$(s_2, p_2)$

$(s_3, p_3)$

Auth-1

s0, s1, s2, s3 = SecKey

## Fig. 1

| Variante | Schlüsselgenerierung | Signieren | Prüfen |
|---|---|---|---|
| XMSS | $1.268 \cdot 10^6$ | 11.455 | 1.159 |
| XMSS$^{MT}$, 2 Ebenen | 2.476.032 | 7.227 | 2.298 |
| XMSS$^{MT}$, 4 Ebenen | 154.752 | 4.170 | 4.576 |

## Fig. 2

| Secret Key | $s_0$ | $s_1$ | $\ldots$ | $s_{t+u-1}$ |
|---|---|---|---|---|
| | $H(s_0)$ | $H(s_1)$ | | $H(s_{t+u-1})$ |
| | $H(H(s_0))$ | $H(H(s_1))$ | | $H(H(s_{t+u-1}))$ |
| | $\vdots$ | $\vdots$ | | $\vdots$ |
| | $\vdots$ | $H^{m_1}(s_1)$ | | $\vdots$ |
| Signatur | $H^{m_0}(s_0)$ | $\vdots$ | | $\vdots$ |
| | $\vdots$ | $\vdots$ | | $H^{m_{t+u-1}}(s_{t+u-1})$ |
| | $\vdots$ | $\vdots$ | | $\vdots$ |
| Public Key | $H^{2^w-1}(s_0)$ | $H^{2^w-1}(s_0)$ | $\ldots$ | $H^{2^w-1}(s_{t-u-1})$ |

Winternitz-Signatur, $H^k$ = k-faches Anwenden der Hash-Funktion H

## Fig. 3

**Europäisches Patentamt**
**European Patent Office**
**Office européen des brevets**

# EUROPÄISCHER RECHERCHENBERICHT

**Nummer der Anmeldung**

**EP 22 02 0465**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 767 873 A1 (GUARDTIME SA [CH]) 20. Januar 2021 (2021-01-20) * Absatz [0004] - Absatz [0013] * * Abbildungen 1, 2 * ----- | 1-4 | INV. H04L9/32 H04L9/00 |
| X | REGNATH EMANUEL ET AL: "AMSA: Adaptive Merkle Signature Architecture", 2020 DESIGN, AUTOMATION & TEST IN EUROPE CONFERENCE & EXHIBITION (DATE), EDAA, 9. März 2020 (2020-03-09), Seiten 1532-1537, XP033781628, DOI: 10.23919/DATE48585.2020.9116517 [gefunden am 2020-06-12] * Seite 1532 - Seite 1533 * * Seite 1536 - Seite 1537 * ----- | 1-4 | |
| A,D | HUELSING TU EINDHOVEN D BUTIN TU DARMSTADT S GAZDAG GENUA GMBH J RIJNEVELD RADBOUD UNIVERSITY A MOHAISEN UNIVERSITY OF CENTRAL FLO: "XMSS: eXtended Merkle Signature Scheme; rfc8391.txt", XMSS: EXTENDED MERKLE SIGNATURE SCHEME; RFC8391.TXT, INTERNET ENGINEERING TASK FORCE, IETF; STANDARD, INTERNET SOCIETY (ISOC) 4, RUE DES FALAISES CH- 1205 GENEVA, SWITZERLAND, 1. Juni 2018 (2018-06-01), Seiten 1-74, XP015126339, [gefunden am 2018-06-01] * Absatz [3.1.2] * ----- -/-- | 1-4 | **RECHERCHIERTE SACHGEBIETE (IPC)** H04L |

Der vorliegende Recherchenbericht wurde für alle Patentansprüche erstellt

| Recherchenort | Abschlußdatum der Recherche | Prüfer |
|---|---|---|
| München | 8. Februar 2023 | Apostolescu, Radu |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

**EP 22 02 0465**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | Aumasson Jean-Philippe ET AL: "SPHINCS + Submission to the NIST post-quantum project, v.3 Contents", , 1. Oktober 2020 (2020-10-01), XP055934227, Gefunden im Internet: URL:https://sphincs.org/data/sphincs+-round3-specification.pdf [gefunden am 2022-06-22] * Absatz [03.2] * * Absatz [7.2.2] * ----- | 1-4 | |
| A | DE 44 13 678 C1 (SIEMENS AG [DE]) 4. Mai 1995 (1995-05-04) * das ganze Dokument * ----- | 1-4 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 8. Februar 2023 | Apostolescu, Radu |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

**EP 22 02 0465**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**08-02-2023**

| Im Recherchenbericht angeführtes Patentdokument | Datum der Veröffentlichung | Mitglied(er) der Patentfamilie | Datum der Veröffentlichung |
|---|---|---|---|
| EP 3767873 A1 | 20-01-2021 | EP 3767873 A1<br>US 2021021429 A1 | 20-01-2021<br>21-01-2021 |
| DE 4413678 C1 | 04-05-1995 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **JEAN-PHILIPPE AUMASSON.** *SPHINCS+, Submission to the NIST postquantum project, v.3,* Oktober 2020, https://sphincs.org/data/sphincs+-round3-specifi-cation.pdf
- **LEON GROOT BRUINDERINK ; ANDREAS HÜLSING.** Oops, I did it again. *Security of One-Time Signatures under Two-Message Attacks. Cryptology ePrint Archive, Report 2016/1042,* 2016, https://eprint.iacr.org/2016/1042
- **DAVID A. COOPER.** *Recommendation for Stateful Hash-Based Signature Schemes,* Oktober 2020, https://doi.org/10.6028/NIST.SP.800-208
- *FIPS 180,* 04. August 2015, https://doi.org/10.6028/NIST.FIPS.180-4
- **MATTHEW GREEN.** *Hash-based Signatures: An illustrated Primer,* April 2018, https://blog.cryptographyengineering.com/2018/04/07/hashbased-signatures-anillustrated-primer
- **ANDREAS HUELSING.** XMSS: eXtended Merkle Signature Scheme. *RFC 8391,* Mai 2018, https://rfc-editor.org/rfc/rfc8391.txt
- **DAVID MCGREW ; MICHAEL CURCIO ; SCOTT FLUHRER.** Leighton-Micali Hash-Based Signatures. *RFC 8554,* April 2019, https://rfc-editor.org/rfc/rfc8554.txt
- **WEN WANG.** XMSS and Embedded Systems - XMSS Hardware Accelerators for RISC-V. *Cryptology ePrint Archive, Report 2018/1225,* 2018, https://eprint.iacr.org/2018/1225